# EUROPEAN PATENT APPLICATION

(11) **EP 4 722 912 A1**
(43) Date of publication of application: **08.04.2026**
(21) Application number: 24864110.2
(22) Date of filing: 27.05.2024
(51) Int. Cl.: G06F 9/50

(54) **IMAGE STORAGE METHOD AND APPARATUS FOR PAGE, AND DEVICE AND STORAGE MEDIUM**

(30) Priority: 11.09.2023 CN 202311164852
(71) Applicant: Jingdong Technology Information Technology Co., Ltd., Beijing 100176 (CN)
(72) Inventor: SANG, Lipeng, Beijing 100176 (CN)
(74) Representative: Böckmann genannt Dallmeyer, Georg Nikolas
(86) International application number: PCT/CN2024/095419
(87) International publication number: WO 2025/055385

(57) **Abstract**

Provided are a mirroring storage method and apparatus for a page, a device, and a storage medium. The mirroring storage method for a page comprises: generating, in response to detecting a mirroring storage request sent by a host machine, a to-be-verified identifier based on a business page in the mirroring storage request (S110); performing a duplicate verification operation on the to-be-verified identifier to obtain a verification result based on identifier query data in a mirroring host (S120); and performing a mirroring storage operation on the business page based on the verification result (S130).

## Description

### CROSS-REFERENCE TO RELATED APPLICATIONS

This application claims the priority to Chinese Patent Application No. 202311164852.X, filed on September 11, 2023, the content of which is hereby incorporated by reference in its entirety.

### TECHNICAL FIELD

The application, which relates to the technical field of computers, relates to, for example, a mirroring storage method and apparatus for a page, a device, and a storage medium.

### BACKGROUND

Mirroring is a technique used for business continuity, disaster recovery and backup. The principle of the mirroring is copying software or an environment on a host machine by a mirroring service and deploying generated copy files on a mirroring host, and when the host machine fails, the copy files on the mirroring host may be used to convert or restore the software or the environment on the host machine.

At least the following technical problems exist in the related art:
Many virtual machines or containers with the same version of operating systems or applications will generally run on the host machine, so there will be many identical business pages. The traditional mirroring storage method causes the identical business pages to repeatedly apply for a mirroring memory of the mirroring host, resulting in a significant memory waste on the mirroring host.

### SUMMARY

The application provides a mirroring storage method and apparatus for a page, a device, and a storage medium so as to solve the problem of repeated applications for a mirroring memory of a mirroring host for identical business pages, reduce a page redundancy of the mirroring host, and save a memory space of the mirroring host.

According to the application, a mirroring storage method for a page is provided, the method comprising: generating, in response to detecting a mirroring storage request sent by a host machine, a to-be-verified identifier based on a business page in the mirroring storage request; performing a duplicate verification operation on the to-be-verified identifier to obtain a verification result based on identifier query data in a mirroring host, wherein the identifier query data includes verified identifiers respectively corresponding to at least one mirroring page; and performing a mirroring storage operation on the business page based on the verification result.

According to the application, a mirroring storage apparatus for a page is provided, the apparatus comprising: a to-be-verified identifier generating module configured to generate, in response to detecting a mirroring storage request sent by a host machine, a to-be-verified identifier based on a business page in the mirroring storage request; a duplicate verification operation performing module configured to perform a duplicate verification operation on the to-be-verified identifier to obtain a verification result based on identifier query data in a mirroring host, wherein the identifier query data includes verified identifiers respectively corresponding to at least one mirroring page; and a mirroring storage performing module configured to perform a mirroring storage operation on the business page based on the verification result.

According to the application, an electronic device is provided, the electronic device comprising: at least one processor; and a memory in a communication connection with the at least one processor; wherein the memory stores a computer program executable by the at least one processor, when executed by the at least one processor, the computer program causes the at least one processor to perform the aforesaid mirroring storage method for a page.

According to the application, a computer-readable storage medium storing computer instructions is provided, wherein the computer instructions, when executed by a processor, cause the processor to perform the aforesaid mirroring storage method for a page.

### BRIEF DESCRIPTION OF THE DRAWINGS

FIG. 1 is a flowchart of a mirroring storage method for a page provided in an embodiment of the application;
FIG. 2 is a schematic diagram of identifier query data provided in an embodiment of the application;
FIG. 3 is a flowchart of another mirroring storage method for a page provided in an embodiment of the application;
FIG. 4 is a flowchart of an example of a mirroring storage method for a page provided in an embodiment of the application;
FIG. 5 is a schematic diagram of a structure of a mirroring storage apparatus for a page provided in an embodiment of the application;
FIG. 6 is a schematic diagram of a structure of an electronic device provided in an embodiment of the application.

### DETAILED DESCRIPTION

The technical solutions in the embodiments of the application will be described below in combination with the figures in the embodiments of the application, and the described embodiments are only part of the embodiments of the application.

The terms "to-be-verified", "verified", "target", "modified", "first", "second", and so on in the Description and Claims of the application and the aforesaid figures are used to distinguish similar objects and are not necessarily used to describe a specific order or sequence. It should be understood that the terms used in this manner are interchangeable in appropriate cases, so that the embodiments of the application described herein can be implemented in orders other than those illustrated or described herein. Furthermore, the terms "comprise" and "have" and any variations thereof are intended to cover a non-exclusive inclusion. For example, processes, methods, systems, products or devices including a series of steps or unit are not necessarily limited to those steps or units clearly listed, but may include other steps or units not listed or inherent to such processes, methods, products or devices.

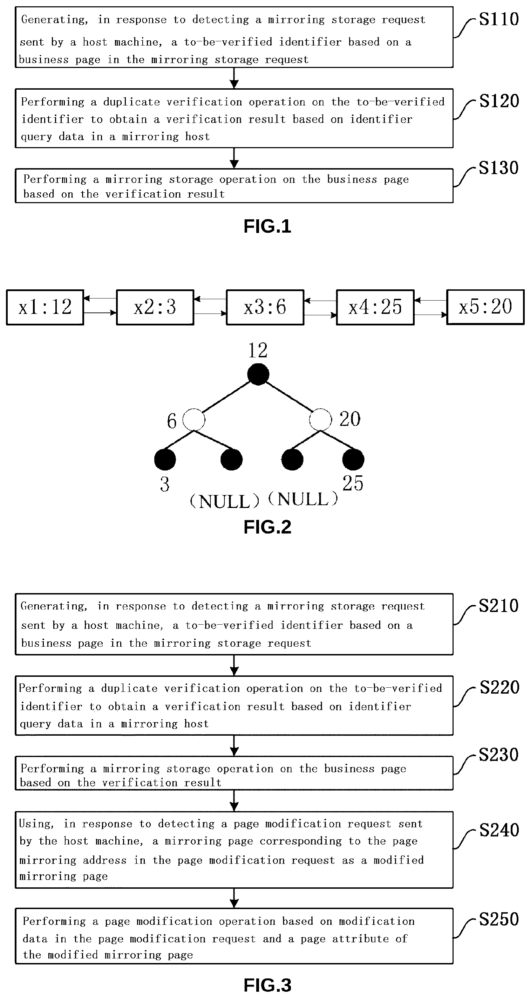

FIG. 1 is a flowchart of a mirroring storage method for a page provided in an embodiment of the application, and this embodiment is applicable to a case of mirroring storage of a page in a host machine. The method may be performed by a mirroring storage apparatus for a page, which may be implemented in the form of hardware and/or software and may be configured in a mirroring host. As shown in FIG. 1, the method comprises:
S110: generating, in response to detecting a mirroring storage request sent by a host machine, a to-be-verified identifier based on a business page in the mirroring storage request.

The mirroring storage request is used to represent a request for mirroring storage of the business page in the host machine in the mirroring host, and the to-be-verified identifier is generated based on page content data of the business page.

In one embodiment, the generating a to-be-verified identifier based on a business page in the mirroring storage request comprises: generating, using a preset verification algorithm, the to-be-verified identifier based on the page content data of the business page in the mirroring storage request.

Exemplarily, the preset verification algorithm includes a checksum algorithm, an XOR check algorithm, a cyclic redundancy check algorithm, a message-digest algorithm, a secure hash algorithm, or the like. The preset verification algorithm used is not limited herein, and any verification algorithm that can generate a to-be-verified identifier based on the page content data is within the scope of protection of this embodiment.

Exemplarily, the to-be-verified identifier may be composed of at least one character selected from digits, words, uppercase letters, lowercase letters, and special characters, and the composition form of the to-be-verified identifier is not limited herein. The composition form of the to-be-verified identifier is generally related to the preset verification algorithm used. Taking the checksum algorithm as an example, the checksum algorithm may convert any byte of data into an 8-bit or 32-bit hexadecimal number system.

S120: performing a duplicate verification operation on the to-be-verified identifier to obtain a verification result based on identifier query data in a mirroring host.

In this embodiment, the identifier query data includes verified identifiers respectively corresponding to at least one mirroring page. The mirroring page is a physical page stored in the mirroring memory of the mirroring host, and the preset verification algorithm used to generate the verified identifier is kept consistent with the preset verification algorithm used to generate the to-be-verified identifier in S110.

In one embodiment, the performing a duplicate verification operation on the to-be-verified identifier to obtain a verification result based on identifier query data in a mirroring host comprises: in a case where the to-be-verified identifier exists in the identifier query data, setting the verification result to a verification failure; and in a case where the to-be-verified identifier does not exist in the identifier query data, setting the verification result to a verification success, wherein the identifier query data includes a doubly linked list and/or a branching search tree.

In one embodiment, a memory elimination algorithm used by the mirroring host is a Least Recently Used (LRU) algorithm, and the advantage of such setting lies in that when the mirroring memory of the mirroring host is insufficient, the mirroring pages in the mirroring memory are deleted based on the LRU algorithm, thereby reducing a system performance loss. Exemplarily, the doubly linked list may be an LRU linked list. The type of the doubly linked list is not limited herein, and may be customized according to actual demands.

Exemplarily, the branching search tree includes a binary search tree and a multi-way search tree. Taking the binary search tree as an example, the binary search tree has the following properties: if the left subtree of the binary search tree is not empty, the values of all nodes on the left subtree are less than the value of the root node; if the right subtree of the binary search tree is not empty, the values of all nodes on the right subtree are greater than the value of the root node.

In one embodiment, the binary search tree is a balanced binary tree. Exemplarily, the balanced binary tree is a red-black tree or an AVL tree.

The red-black tree has the following characteristics: each node is either black or red; the root node is black; each leaf node is black; if a node is red, the child nodes thereof are black. In the red-black tree, there cannot be two consecutive red nodes on all paths from each leaf node to the root node, and the path from any node to each leaf node includes the same number of black nodes.

The AVL tree requires that the absolute value of the height difference between the left and right subtrees should be less than or equal to 1, so the AVL tree is a strictly balanced tree. A case where the absolute value of the height difference between the left and right subtrees is greater than 1 may occur during the construction of the red-black tree, so the red-black tree does not pursue a complete balance. When a node is inserted or deleted, the number of rotations of the AVL tree may be more than the number of rotations of the red-black tree.

The generation logic of the doubly linked list is the storage order of different verified identifiers, and the generation logic of the branching search tree is the sizes of different verified identifiers.

The advantage of setting the identifier query data to the branching search tree lies in that the performance efficiency of the duplicate verification operation may be increased, and then the processing efficiency of the mirroring storage for a page may be increased.

In one embodiment, when the identifier query data includes a doubly linked list and a branching search tree, in a case where the to-be-verified identifier exists in the doubly linked list or the branching search tree, the verification result is set to the verification failure, and in a case where the to-be-verified identifier does not exist in both the doubly linked list and the branching search tree, the verification result is set to the verification success.

FIG. 2 is a schematic diagram of identifier query data provided in an embodiment of the application. The linked structure in the upper portion of FIG. 2 represents the doubly linked list, in which x1-x5 represent five business pages stored in the mirroring memory in sequence, and 12, 3, 6, 25 and 20 represent the verified identifiers respectively corresponding to the five business pages. The tree structure in the lower portion of FIG. 2 represents the red-black tree, in which the white nodes represent the red nodes in the red-black tree, each node including a digit meaning represents one business page, and "NULL" represents the leaf node in the red-black tree.

S130: performing a mirroring storage operation on the business page based on the verification result.

In one embodiment, the performing a mirroring storage operation on the business page based on the verification result comprises: in a case where the verification result is the verification success, storing the to-be-verified identifier in the identifier query data, and storing the business page in a mirroring memory of the mirroring host; and sending the page mirroring address of the business page in the mirroring memory to the host machine, so that the host machine adds the received page mirroring address to a virtual memory page table entry of the business page.

In one embodiment, the storing the business page in the mirroring memory of the mirroring host comprises: determining a mirroring level corresponding to the business page based on the zone number of the business page, and storing the business page in a memory zone corresponding to the mirroring level in the mirroring memory.

The mirroring memory includes a high-reliability memory zone and a low-reliability memory zone. The high-reliability memory zone includes two memory zones, and the low-reliability memory zone includes one memory zone. If the zone number is greater than the low-reliability zone number (or greater than or equal to the high-reliability zone number), the mirroring level is high reliability, and the business pages are stored in the two memory zones in the high-reliability memory zone, respectively, that is, two mirroring pages corresponding to the business pages are stored in the mirroring host. If the zone number is less than or equal to the low-reliability zone number (or less than the high-reliability zone number), the mirroring level is low reliability, and the business pages are stored in the one memory zone in the low-reliability memory zone, that is, one mirroring page corresponding to the business pages is stored in the mirroring host.

In one embodiment, the performing a mirroring storage operation on the business page based on the verification result comprises: in a case where the verification result is the verification failure, using a mirroring page corresponding to the to-be-verified identifier in the mirroring host as a target mirroring page; acquiring the page mirroring address of the target mirroring page in a mirroring memory of the mirroring host; and sending the page mirroring address to the host machine, so that the host machine adds the received page mirroring address to a virtual memory page table entry of the business page.

Exemplarily, before the duplicate verification operation is performed, the business page is stored in a mirroring cache of the mirroring host, and in a case where the verification result is the verification failure, the business page is deleted from the mirroring cache.

The to-be-verified identifier is the same as the verified identifier corresponding to the target mirroring page, and the target mirroring page may be found through the to-be-verified identifier.

When the storage zone of the business page is the high-reliability memory zone, the page mirroring address includes the mirroring addresses of the business page in the two memory zones in the high-reliability memory zone, respectively, and when the storage zone of the business page is the low-reliability memory zone, the page mirroring address includes the mirroring address of the business page in the one memory zone in the low-reliability memory zone.

The virtual memory page table entry is used to manage a virtual memory corresponding to the business page and may represent a mapping relationship between the mirroring address and the physical address of the virtual memory.

The technical solution of this embodiment solves the problem of repeated applications for a mirroring memory of a mirroring host for identical business pages, reduces a page redundancy of the mirroring host, and saves a memory space of the mirroring host by performing a duplicate verification operation on the to-be-verified identifier generated based on the business page to obtain a verification result based on identifier query data in a mirroring host before performing the mirroring storage on the business page in the mirroring storage request sent by the host machine, wherein the identifier query data includes verified identifiers respectively corresponding to at least one mirroring page, and performing a mirroring storage operation on the business page based on the verification result.

FIG. 3 is a flowchart of another mirroring storage method for a page provided in an embodiment of the application, and this embodiment explains the mirroring storage method for a page in the aforesaid embodiment. As shown in FIG. 3, the method comprises:
S210: generating, in response to detecting a mirroring storage request sent by a host machine, a to-be-verified identifier based on a business page in the mirroring storage request.

S220: performing a duplicate verification operation on the to-be-verified identifier to obtain a verification result based on identifier query data in a mirroring host.

S230: performing a mirroring storage operation on the business page based on the verification result.

S210-S230 in this embodiment are the same as or similar to S110-S130 shown in FIG. 1 in the aforesaid embodiment, and are not described in detail in this embodiment.

On the basis of the aforesaid embodiment, the method further comprises: in a case where the verification result is the verification failure, adding one to an associated page number corresponding to the target mirroring page; and in a case where the associated page number corresponding to the target mirroring page is at least two, setting the page attribute of the target mirroring page to a shared read-only attribute.

In the embodiment of the application, a case where the same mirroring page in the mirroring memory is associated with a plurality of business pages may occur, that is, the associated page number corresponding to the mirroring page is two or more. When the associated page number is one, it means that the target mirroring page is associated with only one business page, when the associated page number is two, it means that the target mirroring page is associated with two business pages, and similarly, when the associated page number is n, it means that the target mirroring page is associated with n business pages.

The advantage of setting the page attribute to the shared read-only attribute lies in that occurrence of a fault problem of the target mirroring page being modified by a system or program to which one of the associated business pages belongs, causing errors in systems or programs to which other business pages associated with the target mirroring page belong may be prevented.

S240: using, in response to detecting a page modification request sent by the host machine, a mirroring page corresponding to the page mirroring address in the page modification request as a modified mirroring page.

The page modification request is used to represent a request by a system or program in a host machine to modify a mirroring page stored in a mirroring host, and the page mirroring address includes two mirroring addresses corresponding to a high-reliability memory zone, or the page mirroring address includes one mirroring address corresponding to a low-reliability memory zone.

S250: performing a page modification operation based on modification data in the page modification request and the page attribute of the modified mirroring page.

In one embodiment, the performing a page modification operation based on modification data in the page modification request and the page attribute of the modified mirroring page comprises: in a case where the page attribute of the modified mirroring page is a readable and writable attribute, performing the page modification operation on the modified mirroring page based on the modification data in the page modification request.

If the page attribute of the modified mirroring page is the readable and writable attribute, it means that the associated page number of the modified mirroring page is one.

In one embodiment, the performing a page modification operation based on modification data in the page modification request and the page attribute of the modified mirroring page comprises: in a case where the page attribute of the modified mirroring page is the shared read-only attribute, copying the modified mirroring page to obtain a copied mirroring page; performing the page modification operation on the copied mirroring page based on the modification data in the page modification request; and sending the page mirroring address of the copied mirroring page in the mirroring memory to the host machine, so that the host machine updates the virtual memory page table entry of the business page corresponding to the page modification request based on the received page mirroring address.

If the page attribute of the modified mirroring page is the shared read-only attribute, it means that the associated page number of the modified mirroring page is two or more.

Exemplarily, a copy-on-write (COW) mechanism is used to copy the modified mirroring page to obtain a copied mirroring page.

On the basis of the aforesaid embodiment, the method further comprises: in a case where the page attribute of the modified mirroring page is the shared read-only attribute, subtracting one from the associated page number corresponding to the modified mirroring page; and in a case where the associated page number is one, setting the page attribute of the modified mirroring page to a readable and writable attribute.

The advantage of such setting lies in that in a case where the page attribute of the modified mirroring page is the shared read-only attribute, the mirroring host sends the page mirroring address of the copied mirroring page to the host machine, so the mirroring host disassociates the modified mirroring page from the business page corresponding to the page modification request. In a case where the associated page number is one, modifying the page attribute of the mirroring page may avoid occurrence of a case where the copied mirroring page and the modified mirroring page repeatedly occupy the mirroring memory, thereby reducing the page redundancy of the mirroring host.

On the basis of the aforesaid embodiment, the method further comprises: generating, using a preset verification algorithm, a verified identifier based on the page content data of the copied mirroring page, and storing the verified identifier in the identifier query data.

The advantage of such setting is that a complete mapping relationship between the identifier query data and the mirroring pages stored in the mirroring memory, avoiding occurrence of a case where some mirroring pages do not have verified identifiers or the verified identifiers do not exist in the identifier query data, thereby ensuring the accuracy of the verification result.

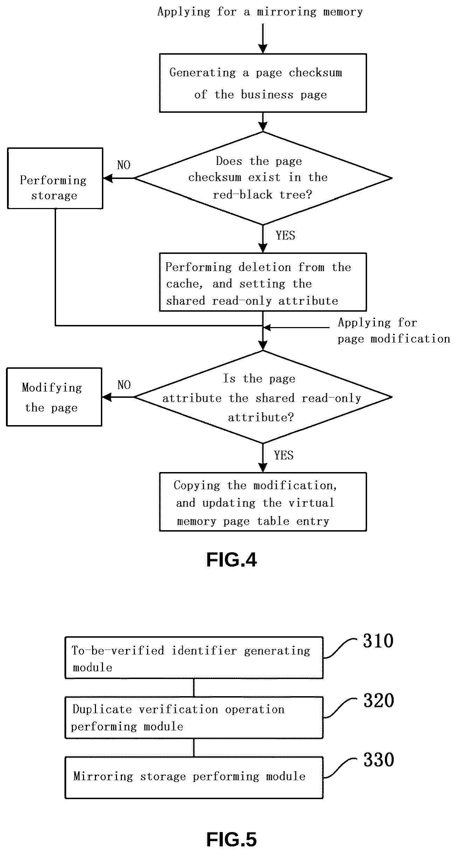

FIG. 4 is a flowchart of an example of a mirroring storage method for a page provided in an embodiment of the application. The host machine sends a mirroring storage request for an application for a mirroring memory to the mirroring host based on the business page, and the mirroring host temporarily stores the business page in a cache and generates a page checksum based on the business page. It is determined whether the page checksum exists in the red-black tree in the mirroring host. If the page checksum does not exist, it means that the verification is successful, the business page is stored in the mirroring memory, and the generated new page mirroring address is sent to the host machine. If the page checksum exists, it means that the verification fails, the business page is deleted from the cache, the existing page mirroring address that matches the page checksum is sent to the host machine, and the page attribute of the mirroring page corresponding to the page mirroring address is set to the shared read-only attribute.

The host machine sends a page modification request for an application for page modification to the mirroring host based on the page mirroring address, and determines whether the page attribute of the modified mirroring page corresponding to the page mirroring address is the shared read-only attribute. If the page attribute of the modified mirroring page corresponding to the page mirroring address is not the shared read-only attribute, the modified mirroring page is modified based on the modification data in the page modification request. If the page attribute of the modified mirroring page corresponding to the page mirroring address is the shared read-only attribute, the modified mirroring page is copied to obtain a copied mirroring page, the copied mirroring page is modified based on the modification data in the page modification request, and the page mirroring address of the copied mirroring page in the mirroring memory is sent to the host machine, so that the host machine updates the virtual memory page table entry of the business page corresponding to the page modification request based on the received page mirroring address.

The technical solution of this embodiment solves the page modification problem of the mirroring page associated with a plurality of business pages, avoids occurrence of a case where the page modification request of the host machine causes an error in the mirroring service, and thus expands applicable scenarios of the mirroring storage method for a page by using, in response to detecting a page modification request sent by the host machine, a mirroring page corresponding to the page mirroring address in the page modification request as a modified mirroring page, and performing a page modification operation based on modification data in the page modification request and the page attribute of the modified mirroring page.

The following is an embodiment of a mirroring storage apparatus for a page provided in an embodiment of the application. This apparatus and the mirroring storage method for a page in the aforesaid embodiment belong to the same concept. For details that are not described in detail in the embodiment of the mirroring storage apparatus for a page, reference may be made to the contents relating to the mirroring storage method for a page in the aforesaid embodiment.

FIG. 5 is a schematic diagram of a structure of a mirroring storage apparatus for a page provided in an embodiment of the application. As shown in FIG. 5, the apparatus comprises: a to-be-verified identifier generating module 310, a duplicate verification operation performing module 320, and a mirroring storage performing module 330.

The to-be-verified identifier generating module 310 is configured to generate, in response to detecting a mirroring storage request sent by a host machine, a to-be-verified identifier based on a business page in the mirroring storage request; the duplicate verification operation performing module 320 is configured to perform a duplicate verification operation on the to-be-verified identifier to obtain a verification result based on identifier query data in a mirroring host, wherein the identifier query data includes verified identifiers respectively corresponding to at least one mirroring page; and the mirroring storage performing module 330 is configured to perform a mirroring storage operation on the business page based on the verification result.

The technical solution of this embodiment solves the problem of repeated applications for a mirroring memory of a mirroring host for identical business pages, reduces a page redundancy of the mirroring host, and saves a memory space of the mirroring host.

In one embodiment, the duplicate verification operation performing module 320 is configured to: in a case where the to-be-verified identifier exists in the identifier query data, set the verification result to a verification failure; and in a case where the to-be-verified identifier does not exist in the identifier query data, set the verification result to a verification success, wherein the identifier query data includes a doubly linked list and/or a branching search tree.

In one embodiment, the mirroring storage performing module 330 comprises: a first page mirroring address sending unit configured to, in a case where the verification result is the verification success, store the to-be-verified identifier in the identifier query data, and store the business page in a mirroring memory of the mirroring host; and send the page mirroring address of the business page in the mirroring memory to the host machine, so that the host machine adds the received page mirroring address to a virtual memory page table entry of the business page.

In one embodiment, the mirroring storage performing module 330 comprises: a second page mirroring address sending unit configured to, in a case where the verification result is the verification failure, use a mirroring page corresponding to the to-be-verified identifier in the mirroring host as a target mirroring page; acquire the page mirroring address of the target mirroring page in a mirroring memory of the mirroring host; and send the page mirroring address to the host machine, so that the host machine adds the received page mirroring address to a virtual memory page table entry of the business page.

In one embodiment, the apparatus further comprises: a shared read-only attribute setting module configured to add one to an associated page number corresponding to the target mirroring page; and in a case where the associated page number is at least two, set the page attribute of the target mirroring page to a shared read-only attribute.

In one embodiment, the apparatus further comprises: a page modification operation performing module configured to use, in response to detecting a page modification request sent by the host machine, a mirroring page corresponding to the page mirroring address in the page modification request as a modified mirroring page; and perform a page modification operation based on modification data in the page modification request and the page attribute of the modified mirroring page.

In one embodiment, the page modification operation performing module is configured to: in a case where the page attribute of the modified mirroring page is the shared read-only attribute, copy the modified mirroring page to obtain a copied mirroring page; perform the page modification operation on the copied mirroring page based on the modification data in the page modification request; and send the page mirroring address of the copied mirroring page in the mirroring memory to the host machine, so that the host machine updates the virtual memory page table entry of the business page corresponding to the page modification request based on the received page mirroring address.

In one embodiment, the apparatus further comprises: a readable and writable attribute setting module configured to subtract one from the associated page number corresponding to the modified mirroring page; and in a case where the associated page number is one, setting the page attribute of the modified mirroring page to a readable and writable attribute.

The mirroring storage apparatus for a page provided in the embodiment of the application, which may perform the mirroring storage method for a page provided in any embodiment of the application, has corresponding functional modules for performing the method and achieves corresponding effects.

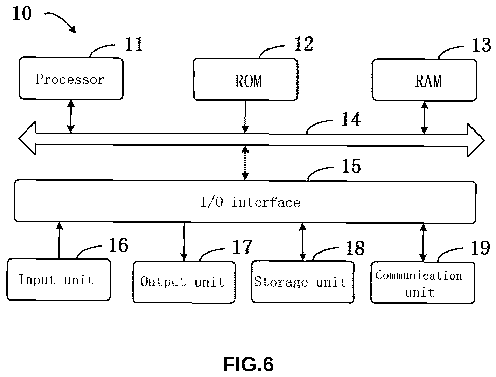

FIG. 6 is a schematic diagram of a structure of an electronic device provided in an embodiment of the application. The electronic device 10 is the mirroring host in the aforesaid embodiment, and is intended to represent various forms of digital computers, such as laptop computers, desktop computers, workstations, personal digital assistants, servers, blade servers, mainframe computers, and other suitable computers. The electronic device may also represent various forms of mobile apparatuses, such as personal digital assistants, cellular phones, smart phones, wearable devices (such as helmets, glasses, watches, etc.) and other similar computing devices. The components shown herein, their connections and relationships, and their functions are examples only, and are not intended to limit implementations of the application described and/or claimed herein.

As shown in FIG. 6, the electronic device 10 comprises at least one processor 11, and a memory in a communication connection with the at least one processor 11, such as a Read-Only Memory (ROM) 12, a Random Access Memory (RAM) 13, etc., wherein the memory stores a computer program executable by the at least one processor 11, and the processor 11 may perform various appropriate actions and processes in accordance with the computer program stored in the ROM 12 or the computer program loaded from the storage unit 18 to the RAM 13. Various programs and data required for the operation of the electronic device 10 may also be stored in the RAM 13. The processor 11, the ROM 12, and the RAM 13 are connected to each other through a bus 14. An Input/Output (I/O) interface 15 is also connected to the bus 14.

A plurality of components in the electronic device 10 are connected to the I/O interface 15, including: an input unit 16, such as a keyboard, a mouse, etc.; an output unit 17, such as various types of displays, speakers, etc.; a storage unit 18, such as a disk, an optical disk, etc.; and a communication unit 19, such as a network card, a modem, a wireless communication transceiver, etc. The communication unit 19 allows the electronic device 10 to exchange information/data with other devices through a computer network such as the Internet and/or various telecommunication networks.

The processor 11 may be various general-purpose and/or special-purpose processing components having processing and computing capabilities. Some examples of the processor 11 include a Central Processing Unit (CPU), a Graphics Processing Unit (GPU), various dedicated Artificial Intelligence (AI) computing chips, various processors that run machine learning model algorithms, a Digital Signal Processor (DSP), as well as any appropriate processor, controller, microcontroller, and so on. The processor 11 performs the plurality of methods and processes described above, such as the mirroring storage method for a page provided in the aforesaid embodiment.

In some embodiments, the mirroring storage method for a page provided in the aforesaid embodiment may be implemented as a computer program, which is tangibly included in a computer-readable storage medium, such as the storage unit 18. In some embodiments, a part or the entirety of the computer program may be loaded and/or installed onto the electronic device 10 via the ROM 12 and/or the communication unit 19. When the computer program is loaded into the RAM 13 and executed by the processor 11, one or more steps of the mirroring storage method for a page described above may be performed. Alternatively, in other embodiments, the processor 11 may be configured to execute the mirroring storage method for a page in any other appropriate manner (such as by means of firmware).

Various implementation modes of the systems and techniques described above herein may be achieved in a digital electronic circuit system, an integrated circuit system, a Field Programmable Gate Array (FPGA), an Application Specific Integrated Circuit (ASIC), an Application Specific Standard Product (ASSP), a System On Chip (SOC), a Complex Programmable Logic Device (CPLD), computer hardware, firmware, software, and/or combinations thereof. These various implementation modes may include: implementations in one or more computer programs that may be executed and/or explained on a programmable system including at least one programmable processor. The programmable processor, which may be a special-purpose or general-purpose programmable processor, may receive data and instructions from a storage system, at least one input apparatus, and at least one output apparatus, and transmit the data and instructions to the storage system, the at least one input apparatus, and the at least one output apparatus.

The computer program for implementing the mirroring storage method for a page of the application may be written in any combination of one or more programming languages. These computer programs may be provided to a processor of a general-purpose computer, a special-purpose computer or another programmable data processing apparatus, so that when the computer program is executed by the processor, the functions/operations specified in the flowcharts and/or block diagrams are implemented. The computer program may be executed entirely on a machine, partly on the machine, as an independent software package, partly on the machine and partly on a remote machine, or entirely on the remote machine or a server.

In the context of the application, the computer-readable storage medium may be a tangible medium that can include or store a computer program for use by or in combination with an instruction execution system, apparatus, or device. The computer-readable storage medium may include an electronic, magnetic, optical, electromagnetic, infrared, or semiconductor system, apparatus, or device, or any suitable combination thereof. Alternatively, the computer-readable storage medium may be a machine-readable signal medium. Examples of the machine-readable storage medium will include an electrical connection based on one or more wires, a portable computer disk, a hard disk, a RAM, a ROM, an Erasable Programmable Read Only Memory (EPROM or flash memory), an optical fiber, a portable Compact Disc ROM (CD-ROM), an optical storage device, a magnetic storage device, or any suitable combination thereof.

In order to provide an interaction with a user, the systems and techniques described herein may be implemented on an electronic device, having: a display apparatus (such as a Cathode Ray Tube (CRT) or a Liquid Crystal Display (LCD) monitor) configured to display information to the user; and a keyboard and pointing device (such as a mouse or trackball), through which the user may provide an input to the electronic device. Other types of apparatuses may also be configured to provide an interaction with a user; for example, a feedback provided to the user may be any form of sensory feedback (such as a visual feedback, an auditory feedback, or a tactile feedback); and the input from the user may be received in any form (including an acoustic input, a voice input, or a tactile input).

The systems and techniques described herein may be implemented in a computing system including back-end components (such as serving as a data server), or a computing system including middleware components (such as an application server), or a computing system including front-end components (such as a user computer with a graphical user interface or a web browser, through which the user may interact with the implementation modes of the systems and techniques described herein), or a computing system including any combination of such back-end components, middleware components, or front-end components. The components of the system may be connected with each other by any form or medium of digital data communication (such as a communication network). Examples of the communication network include: a Local Area Network (LAN), a Wide Area Network (WAN), a blockchain network, and the Internet.

The computing system may include a client and a server. The client and the server are generally remote from each other and usually interact with each other through a communication network. The relationship between the client and the server is produced through computer programs running on the respective computers and having a client-server relationship with each other. The server may be a cloud server, also known as a cloud computing server or a cloud host, which is a host product in the cloud computing service system, and overcomes the defects of difficult management and limited business scalability existing in traditional physical hosts and Virtual Private Server (VPS) services.

Various forms of flows shown above may be used to reorder, add, or delete steps. For example, the plurality of steps recorded in the application may be performed in parallel, sequentially, or in different orders, as long as the expected results of the technical solution of the application can be achieved, and no limitations are given herein.

## Claims

1. A mirroring storage method for a page, comprising:
generating, in response to detecting a mirroring storage request sent by a host machine, a to-be-verified identifier based on a business page in the mirroring storage request;
performing a duplicate verification operation on the to-be-verified identifier to obtain a verification result based on identifier query data in a mirroring host, wherein the identifier query data includes verified identifiers respectively corresponding to at least one mirroring page; and
performing a mirroring storage operation on the business page based on the verification result.

2. The method according to claim 1, wherein the performing the duplicate verification operation on the to-be-verified identifier to obtain the verification result based on the identifier query data in the mirroring host comprises:
in a case where the to-be-verified identifier exists in the identifier query data, setting the verification result to a verification failure; and
in a case where the to-be-verified identifier does not exist in the identifier query data, setting the verification result to a verification success, wherein the identifier query data includes at least one of a doubly linked list and a branching search tree.

3. The method according to claim 2, wherein the performing the mirroring storage operation on the business page based on the verification result comprises:
in a case where the verification result is the verification success, storing the to-be-verified identifier in the identifier query data, and storing the business page in a mirroring memory of the mirroring host; and
sending a page mirroring address of the business page in the mirroring memory to the host machine, so that the host machine adds a received page mirroring address to a virtual memory page table entry of the business page.

4. The method according to claim 2, wherein the performing the mirroring storage operation on the business page based on the verification result comprises:
in a case where the verification result is the verification failure, using a mirroring page corresponding to the to-be-verified identifier in the mirroring host as a target mirroring page;
acquiring a page mirroring address of the target mirroring page in a mirroring memory of the mirroring host; and
sending the page mirroring address to the host machine, so that the host machine adds the received page mirroring address to a virtual memory page table entry of the business page.

5. The method according to claim 4, further comprising:
adding one to an associated page number corresponding to the target mirroring page; and
in a case where the associated page number corresponding to the target mirroring page is at least two, setting a page attribute of the target mirroring page to a shared read-only attribute.

6. The method according to claim 5, further comprising:
using, in response to detecting a page modification request sent by the host machine, a mirroring page corresponding to a page mirroring address in the page modification request as a modified mirroring page; and
performing a page modification operation based on modification data in the page modification request and a page attribute of the modified mirroring page.

7. The method according to claim 6, wherein the performing the page modification operation based on the modification data in the page modification request and the page attribute of the modified mirroring page comprises:
in a case where the page attribute of the modified mirroring page is the shared read-only attribute, copying the modified mirroring page to obtain a copied mirroring page;
performing the page modification operation on the copied mirroring page based on the modification data in the page modification request; and
sending the page mirroring address of the copied mirroring page in the mirroring memory to the host machine, so that the host machine updates the virtual memory page table entry of the business page corresponding to the page modification request based on the received page mirroring address.

8. The method according to claim 7, further comprising:
subtracting one from an associated page number corresponding to the modified mirroring page; and
in a case where the associated page number corresponding to the modified mirroring page is one, setting the page attribute of the modified mirroring page to a readable and writable attribute.

9. A mirroring storage apparatus for a page, comprising:
a to-be-verified identifier generating module configured to generate, in response to detecting a mirroring storage request sent by a host machine, a to-be-verified identifier based on a business page in the mirroring storage request;
a duplicate verification operation performing module configured to perform a duplicate verification operation on the to-be-verified identifier to obtain a verification result based on identifier query data in a mirroring host, wherein the identifier query data includes verified identifiers respectively corresponding to at least one mirroring page; and
a mirroring storage performing module configured to perform a mirroring storage operation on the business page based on the verification result.

10. An electronic device, comprising:
at least one processor; and
a memory in a communication connection with the at least one processor; wherein
the memory stores a computer program executable by the at least one processor, when executed by the at least one processor, the computer program causes the at least one processor to perform the mirroring storage method for a page according to any of claims 1-8.

11. A computer-readable storage medium storing computer instructions, wherein the computer instructions, when executed by a processor, cause the processor to perform the mirroring storage method for a page according to any of claims 1-8.
